# EUROPÄISCHE PATENTSCHRIFT

(11) **EP 1 509 362 B1**
(45) Veröffentlichungstag und Bekanntmachung des Hinweises auf die Patenterteilung: **08.11.2006**
(21) Anmeldenummer: 03737997.1
(22) Anmeldetag: 05.06.2003
(51) Int. Cl.: B24B 19/12, B23Q 5/28, B23Q 5/10

(54) **KURBELWELLENBEARBEITUNGSMASCHINE**
CRANKSHAFT PRODUCTION MACHINE
MACHINE D'USINAGE DE VILEBREQUINS

(30) Priorität: 06.06.2002 DE 20208792 U
(43) Veröffentlichungstag der Anmeldung: 02.03.2005
(73) Patentinhaber: NILES-SIMMONS Industrieanlagen GmbH, 09117 Chemnitz (DE)
(72) Erfinder: ROBOTTA, Reinhard, 09306 Erlau (DE); SCHRÖTER, Gunter, 09116 Chemnitz (DE)
(74) Vertreter: Grättinger & Partner (GbR)
(86) Internationale Anmeldenummer: PCT/EP2003/005905
(87) Internationale Veröffentlichungsnummer: WO 2003/103895

(56) Entgegenhaltungen:
- EP-A- 1 155 780
- US-A- 4 343 114
- US-A- 4 646 596

## Beschreibung

Die vorliegende Erfindung betrifft eine Kurbelwellenbearbeitungsmaschine zur Herstellung von zentrische und exzentrische zu bearbeitenden Oberflächen aufweisenden Kurbelwellen, die um eine C-Achse drehbar eingespannt sind.

Dreh-/Fräsbearbeitungsmaschinen zur Bearbeitung von um eine C-Achse drehbaren, zentrische und exzentrische Oberflächen aufweisenden Werkstücken wie insbesondere Kurbelwellen umfassen einen Spindelkasten und eine Gegenspindel oder einen Reitstock mit Antriebseinheiten und Motoren für den Antrieb des Werkstückes um die C-Achse, mindestens einen verfahrbaren Längsschlitten mit Antriebseinheiten für den Vorschub von Baugruppen für Werkzeugspindeln sowie der Werkzeuge. Sie umfassen somit insbesondere mindestens eine Antriebseinheit für rotatorische Bewegungen, worunter Antriebseinheiten insbesondere für werkzeug- und werkstücktreibende Baugruppen wie Drehspindeln, C-Achsen und Werkzeugantriebe zur Bearbeitung zentrischer und exzentrischer Werkstückoberflächen wie z.B. Flächen an Kurbelwellen verstanden werden sollen.

Bekannte Lösungen gehen davon aus, daß bei Antriebseinrichtungen für Werkstück- und Werkzeugspindeln die Wirkverbindung über Elektromotoren und radial verschiebbare Zahnräder und/oder über mehrstufige Zahnrad-Planetengetriebe bzw. Schnecken sowie Zahnriemengetriebe erfolgt.

Die herkömmlichen Antriebs- und Vorschubeinrichtungen mit Motorantrieb und Getriebe weisen Mängel in Form von hohem ausrüstungsseitigen Aufwand und Platzbedarf auf. Zudem weisen die Antriebsstränge in den Fräsaggregaten spielbehaftete Elemente wie z.B. Zahnräder, Kupplungen und hohe Übersetzungen auf. Dadurch ist eine hochgenaue Fertigung von Werkstücken nicht darstellbar, da insbesondere die erreichbare Oberflächengüte begrenzt ist. Weiterhin wird durch Spiel die Eigenstabilität (Rattersteife) der Fräseinheiten abgesenkt. Werkstückspindelseitig sind für C-Achsen ebenfalls Getriebe, meist Schneckengetriebe, die jedoch spielbehaftet sind, als Antrieb vorhanden.

Das US-Patent 4343114 offenbart eine Nockenwellenbearbeitungsmaschine, deren Werkstückspindelantrieb einen Antriebsmotor und ein zwischen diesen und die Werkstückspindel geschaltetes Getriebe umfaßt. Dabei ist eine winkel- und formabhängige Drehzahlsteuerung für das Werkstück (Nockenwelle) vorgesehen, um konstante Schnittgeschwindigkeiten für das Schleifen über den Umfang des Nockens zu erhalten. Hierzu wird der Nocken einer Meister-Nockenwelle abgetastet und die entsprechende Information im Rahmen der Drehzahlsteuerung des Antriebsmotors für die Werkstückspindel berücksichtigt.

Die Europäische Patentanmeldung 1155780 betrifft eine Schleifmaschine mit einem drehfähigen Schleifspindelstock. Dabei ist der Ständer des Antriebsmotors für den Schleifspindelstock mit dem Schleifspindelstock selbst gekoppelt, und der Läufer des Motors ist mit der Tragwelle verbunden. Innerhalb des Schleifspindelstocks ist eine Meßeinrichtung zur Aufnahme der Winkellage des Schleifspindelstocks angeordnet.

Der Erfindung liegt die Aufgabe zugrunde, eine Kurbelwellenbearbeitungsmaschine der eingangs genannten Art bereitzustellen, welche die vorstehend genannten Nachteile bekannter Kurbelwellenbearbeitungsmaschinen vermeidet.

Diese Aufgabe wird gelöst durch eine Kurbelwellenbearbeitungsmaschine mit den Merkmalen des Anspruches 1. Durch den Einsatz von speziell auf die Antriebsdynamik und Momenten bilanz zugeschnittene Torque-Motoren als Direktantriebe sowohl für die Frässpindel als auch für die Werkstückspindel wird Spiel beseitigt und hohe Steife realisiert. Dadurch ist erst eine effiziente Bearbeitung in hoher Qualität möglich. Durch die neue Antriebseinrichtung kann sowohl in einer Anordnung der Spindelantrieb mit Eilgangdrehzahl zum winkelabhängigen Positionieren als auch zur Lageregelung, bezeichnet als C-Achse, zur Lagezuordnung und mit geringen Geschwindigkeiten zum Bearbeiten (fräsen), betrieben werden. Torque-Motoren sind Dreh-Antriebseinrichtungen mit hoher Winkelgenauigkeit und hohen Drehmoment. In Anwendung der vorliegenden Erfindung sind die Antriebseinrichtungen für rotatorische Bewegungen so ausgeführt, daß mit geringem Anteil mechanischer Bauteile spielfreie, geräuscharme, verschleißfreie Wirkverbindungen geschaffen werden, die sich durch eine hohe Stabilität, eine hohe Präzision und einen hohen Wirkungsgrad für die Werkstückbearbeitung auszeichnen. Zugleich wird für die Herstellung von Kurbelwellen die Anwendung der Verfahren Außenfräsen, Drehfräsen, Wirbeln sowie Drehen und Drehräumen in höherer Effektivität und Qualität ermöglicht. Es wird ein sicherer, berechenbarer Schutz gegen Überlastung und damit Zerstörung der Werkzeuge und Spannmittel im Kollisionsfall gewährleistet. Einsparungspotentiale werden durch geringere Kosten der Antriebseinrichtung und niedrigere Instandhaltungsaufwände durch Verschleißfreiheit und keine Schmierung wirksam. Dadurch, daß Lage und Winkelgenauigkeit der Torque-Motoren übereinstimmen, wird absolute Synchronität (nur noch Meßsystemfehler) und eine hohe Präzision erreicht. Mittels der erfindungsgemäßen Kurbelwellen Fräsmaschine kann in einer einzigen Aufspannung der Kurbelwelle sowohl eine Bearbeitung der Hauptlager wie auch der exzentrischen Hublager erfolgen. Die erzielten Genauigkeiten reduzieren den Aufwand zum Fertigschleifen der Lagersitze beträchtlich, wodurch sich in erheblichem Umfang Fertigungskosten einsparen lassen. Andererseits ist auch eine Fertigbearbeitung in Schleifqualität möglich.

Eine Kurbelwellenbearbeitungsmaschine im Sinne der vorliegenden Erfindung kann insbesondere eine Dreh-Fräsmaschine oder ein Dreh-Fräsbearbeitungszentrum sein.

Vorteilhafte Ausgestaltungen der erfindungsgemäßen Kurbelwellenbearbeitungsmaschine ergeben sich aus den Unteransprüchen sowie der nachfolgenden Beschreibung.

So weist die erfindungsgemäße Kurbelwellenbearbeitungsmaschine gemäß einer bevorzugten Weiterbildung eine paarweise Anordnung von Torque-Motoren für Fräs-, Wirbel-, Drehräum- und Drehfräsaggregate aus. In einer weiteren bevorzugten Ausführungsform ist eine Einrichtung zur Anwendung einer AC-Regelung vorgesehen, wodurch eine bessere Regelung der Bearbeitungstechnologie erreicht wird. Damit ist eine weitere Optimierung bei der Kurbelwellenbearbeitung in Drehbearbeitungszentren erreichbar.

Es ist auch die Anwendung des Dreh- und Fräsverfahrens bzw. des Dreh- und Nachformfräsens in einer Aufspannung möglich.

Gemäß einer weiteren bevorzugten Weiterbildung zeichnet sich die erfindungsgemäße Kurbelwellenbearbeitungsmaschine durch zwei spiegelbildliche, elektronisch synchronisierte Werkstückspindeln aus.

Bei eingeschränkten Einbauräumen für Werkzeugspindelantriebe wird der Einsatz von Torque-Motoren mit Segmentwicklung vorgeschlagen. Damit werden die Einbaubedingungen so verbessert, daß mehr radialer Freiraum entsteht. Sowohl die Werkzeugantriebe wie auch die Werkstückantriebe sind bevorzugt mit Flüssigkeit gekühlt. Dies steigert die Reproduzierbarkeit der Bearbeitung und somit deren Qualität.

Ebenfalls zu einer besonders hohen Fertigungsgenauigkeit der erfindungsgemäßen Kurbelwellenbearbeitungsmaschine trägt dabei, wenn das Maschinengestell gemäß einer anderen bevorzugten Weiterbildung in Gußausführung und/oder Betonausführung hergestellt ist, wobei besonders bevorzugt kombinierte Wälz-Gleit-Führungssysteme vorgesehen sind.

Im Hinblick auf die Kapazität der erfindungsgemäßen Kurbelwellenbearbeitungsmaschine erweist es sich als besonders günstig, wenn zwei Fräseinheiten vorgesehen sind, welche insbesondere über außenverzahnte Scheibenfräser mit hoher Schneidenanzahl verfügen können.

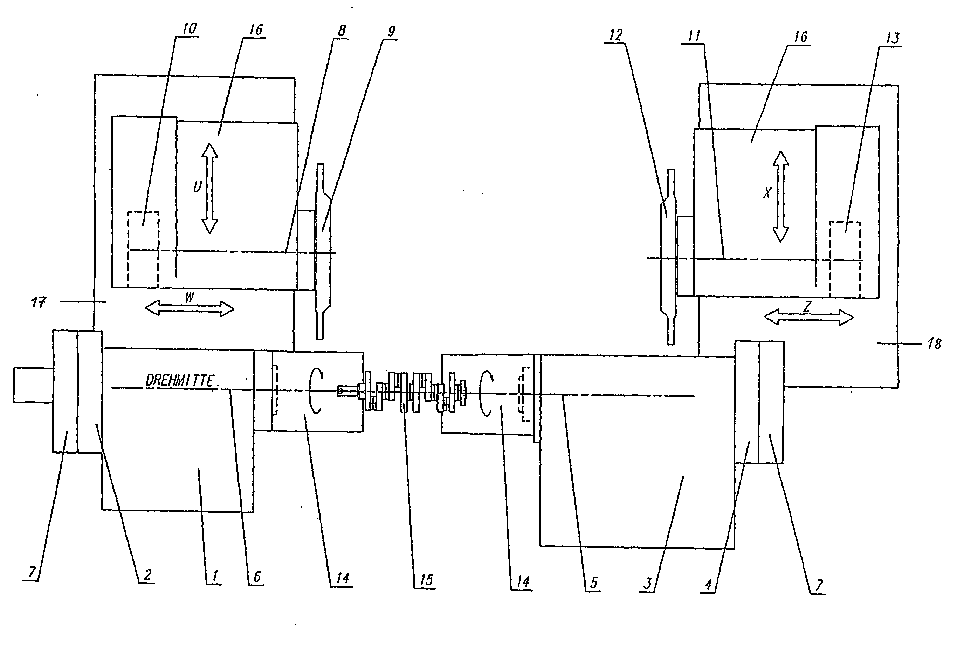

Im folgenden wird die vorliegende Erfindung anhand eines in der Zeichnung veranschaulichten bevorzugten Ausführungsbeispiels näher erläutert. Die Zeichnung zeigt dabei in schematischer Darstellung eine Kurbelwellenbearbeitungsmaschine nach der vorliegenden Erfindung in Vorderansicht unter besonderer Hervorhebung der Antriebseinrichtungen.

Die Zeichnung zeigt eine Kurbelwellenbearbeitungsmaschine mit einem Spindelkasten mit einer ersten, um die C-Achse 6 drehbaren Werkstückspindel 1. Dem Spindelkasten ist als Spindelantrieb ein Torque-Motor 2 zugeordnet, dessen Achse mit der C-Achse 6 zusammenfällt. Ein Meßsystem 7 ist integrierter Bestandteil des lageregelbaren Spindelantriebes. Gegenüber sind an einer Gegenspindel mit einer zweiten Werkstückspindel 2 als Antrieb ein Torque-Motor 4 mit integrierter C-Achse 5 angeordnet. Die Maschinensteuerung gestattet eine elektronische Synchronisation der beiden Werkstück-Spindelantriebe.

Mittels der Spanneinrichtungen 14 wird das zu bearbeitende Werkstück 15 in Form einer Kurbelwelle aufgenommen.

Die Kurbelwellenbearbeitungsmaschine umfaßt zwei Fräseinheiten. Auf den beiden in Z- und W-Richtung verfahrbaren Längsschlitten 17 und 18 der beiden Fräseinheiten sind Querschlitten 16, in den Vorschubachsen X und U verfahrbar, angeordnet. Jede Fräseinheit umfaßt jeweils einen Außenfräser 9, 12 an den zugeordneten Werkzeugspindeln 8, 11. Die Außenfräser werden durch je einen Torque-Motor 10 bzw. 13 angetrieben.

### Bezugszeichenliste

- 1: erste Werkstückspindel
- 2: Torque-Motor
- 3: zweite Werkstückspindel
- 4: Torque-Motor
- 5: erste C-Achse
- 6: zweite C-Achse
- 7: Meßsystem
- 8: erste Werkzeugspindel
- 9: Scheibenfräser
- 10: Torque-Motor
- 11: zweite Werkzeugspindel
- 12: Scheibenfräser
- 13: Torque-Motor
- 14: Werkstückspanneinrichtung
- 15: Kurbelwelle
- 16: Querschlitten (U, X)
- 17: Längsschlitten (W)
- 18: Längsschlitten (Z)

## Patentansprüche

1. Kurbelwellenfräsmaschine zur Herstellung von zentrische und exzentrische zu bearbeitenden Oberflächen aufweisenden Kurbelwellen (15), die um eine C-Achse (5, 6) drehbar eingespannt sind, umfassend einen Spindelkasten, eine Gegenspindel oder einen Reitstock, mindestens einen verfahrbaren Längsschlitten (17, 18) und Antriebseinheiten mit Motoren für den Antrieb der Kurbelwelle um die C-Achse und den Vorschub von Baugruppen für Werkzeugspindeln (8, 11) sowie der Werkzeuge, wobei bei mindestens einer dem Antrieb der Werkstückspindeln (1, 3) und bei mindestens einer dem Antrieb der Werkzeugspindeln (8, 11) dienenden Antriebseinheit der Motor jeweils als Torque-Motor als Direktantrieb (2, 4, 10, 13) ausgeführt ist.

2. Kurbelwellenfräsmaschine nach Anspruch 1,
**dadurch gekennzeichnet,**
**daß** für den Direktantrieb zweier einander gegenüberliegender Werkstückspindeln (1, 3) zwei jeweils einen Torque-Motor (2, 4) umfassende Antriebseinheiten vorgesehen sind.

3. Kurbelwellenfräsmaschine nach Anspruch 1 oder Anspruch 2,
**dadurch gekennzeichnet,**
**daß** als Antrieb für Werkzeugspindeln (8, 11) Torque-Motoren (10, 13) mit Segmentwicklung vorgesehen sind.

4. Kurbelwellenfräsmaschine nach einem der Ansprüche 1 bis 3,
**dadurch gekennzeichnet,**
**daß** für die Positionierung der Werkstückspindeln (1, 3) einzeln oder paarweise Torque-Motoren (2, 4) mit integriertem Meßsystem (7) anstelle C-Achsantrieben vorgesehen sind.

5. Kurbelwellenfräsmaschine nach einem der Ansprüche 1 bis 4,
**dadurch gekennzeichnet,**
**daß** für das Drehräumen oder Dreh-Drehräumen von Kurbelwellen (15) die Antriebseinheit für die Werkstückspindel (1, 3) und/oder die Antriebseinheit für die Werkzeugspindel (8, 11) paarweise Torque-Motoren umfassen.

6. Kurbelwellenfräsmaschine nach einem der Ansprüche 1 bis 5,
**dadurch gekennzeichnet,**
**daß** für das Innenfräsen (Wirbeln) die Antriebseinheit für die Werkstückspindel (1, 3) und/oder die Antriebseinheit für die Werkzeugspindel (8, 11) mindestens ein Torque-Motor als Direktantrieb umfaßt.

7. Kurbelwellenfräsmaschine nach einem der Ansprüche 1 bis 6,
**dadurch gekennzeichnet,**
**daß** der Anbauraum der Torque-Motoren (2, 4) auf der Achse (5, 6) der Werkstückspindel (1, 2) und/oder der Achse der Werkzeugspindel (8, 11) vorgesehen ist.

8. Kurbelwellenfräsmaschine nach einem der Ansprüche 1, 3 oder 4,
**dadurch gekennzeichnet,**
**daß** eine Einrichtung zur Auslastungsregelung (AC-Regelung) der Torque-Motoren (2, 4; 10, 13) für die Werkstückspindeln (1, 2) in Verbindung mit der Antriebskraftregelung für die Fräswerkzeuge (9, 12) vorgesehen ist.

## Claims

1. A crankshaft milling machine for producing crankshafts (15) which have centric and eccentric surfaces to be machined and which are held in a manner that enables them to rotate about a C axis (5, 6), comprising a headstock, a counter spindle or a tailstock, at least one displaceable longitudinal slide (17, 18), and drive units having motors for driving the crankshaft about the C axis and for advancing subassemblies for tool spindles (8, 11) and the tools, with the motor being provided in the form of a torque motor as a direct drive (2, 4, 10, 13) in at least one drive unit, which serves to drive the tool spindles (1, 3), and in at least one drive unit, which serves to drive the tool spindles (8, 11).

2. A crankshaft milling machine as claimed in claim 1,
**characterised in that**
drive units are provided for the direct drive of two work-spindles opposing each other (1, 3) comprising two torque motors and one torque motor respectively (2, 4).

3. A crankshaft milling machine as claimed in claim 2,
**characterised in that**
torque motors (10, 13) with segmented winding are provided as the drive for work-spindles (8, 11).

4. A crankshaft milling machine as claimed in one of the claims 1 to 3,
**characterised in that**
torque motors (2, 4) with an integrated measurement system (7) are provided individually or in a pair in the place of C axis drives for the positioning of the work-spindles (1, 3).

5. A crankshaft milling machine as claimed in one of the claims 1 to 4,
**characterised in that**
the drive unit for the work-spindle (1, 3) and/or the drive unit for the work-spindle (8, 11) comprises pairs of torque motors for the turning space or turning-turning spaces of crankshafts (15).

6. A crankshaft milling machine as claimed in one of the claims 1 to 5,
**characterised in that**
the drive unit for the work-spindle (1, 3) and/or the drive unit for the work-spindle (8, 11) comprises at least one torque motor as a direct drive for the internal milling (turning).

7. A crankshaft milling machine as claimed in one of the claims 1 to 6,
**characterised in that**
the built-on space of the torque motors (2, 4) is provided on the axis (5, 6) of the work-spindle (1, 2) and/or the axis of the work-spindle (8, 11).

8. A crankshaft milling machine as claimed in one of the in claims 1, 3, or 4,
**characterised in that**
a device for the adaptive control constraint (AC constraint) of the torque motors (2, 4; 10, 13) is provided for the work-spindles (1, 2) in conjunction with the driving force control for the milling tools (9, 12).

## Revendications

1. Fraiseuse d'usinage de vilebrequins pour la fabrication de vilebrequins (15) qui présentent des surfaces à usiner centrées et excentrées et sont tenus avec possibilité de rotation autour d'un axe C, comportant une poupée fixe, une contre-poupée ou une poupée mobile, au moins un chariot longitudinal (17, 18) mobile ainsi que des unités d'entraînement équipées de moteurs pour l'entraînement du vilebrequin autour de l'axe C et l'avance de modules pour des broches porte-outils (8, 11) et des outils, dans laquelle dans au moins une des unités d'entraînement assurant l'entraînement des broches porte-pièces (1, 3) et dans au moins une des unités d'entraînement assurant l'entraînement des broches porte-outils (8, 11), le moteur est conformé en moteur couple, en entraînement direct (2, 4, 10 ,13).

2. Fraiseuse d'usinage de vilebrequins selon la revendication 1, **caractérisée par le fait que** pour l'entraînement direct de deux broches porte-pièces (1,3) disposées en vis-à-vis, il est prévu deux unités d'entraînement avec chacune un moteur couple (2, 4).

3. Fraiseuse d'usinage de vilebrequins selon la revendication 1 ou la revendication 2, **caractérisée par le fait que** pour l'entraînement des broches porte-outils (8, 11), il est prévu des moteurs couples (10, 13) à enroulement segmenté.

4. Fraiseuse d'usinage de vilebrequins selon une des revendications 1 à 3, **caractérisée par le fait que** pour le positionnement des broches porte-pièces (1, 3), il est prévu des moteurs couples (2, 4) isolés ou par paires à système de mesure (7) intégré à la place d'entraînements d'axe C.

5. Fraiseuse d'usinage de vilebrequins selon une des revendications 1 à 4, **caractérisée par le fait que** pour le tournage TAV ou le tournage TTAV de vilebrequins (15), l'unité d'entraînement de la broche porte-pièce (1, 3) et/ou l'unité d'entraînement de la broche porte-outil (8, 11) comporte(nt) des moteurs couples par paires.

6. Fraiseuse d'usinage de vilebrequins selon une des revendications 1 à 5, **caractérisée par le fait que** pour le fraisage intérieur, l'unité d'entraînement de la broches porte-pièce (1, 3) et/ou l'unité d'entraînement de la broche porte-outil (8, 11) comporte(nt) au moins un moteur couple comme entraînement direct.

7. Fraiseuse d'usinage de vilebrequins selon une des revendications 1 à 6, **caractérisée par le fait que** l'espace de montage des moteurs couples (2, 4) est prévu sur l'axe (5, 6) de la broche porte-pièce (1, 3) et/ou sur l'axe de la broche porte-outil (8, 11).

8. Fraiseuse d'usinage de vilebrequins selon une des revendications 1 ,3 ou 4, **caractérisée par le fait qu'**il est prévu un dispositif de régulation de la charge (commande adaptative) des moteurs couples (2, 4; 10, 13) en liaison avec la régulation de la force d'entraînement des outils de fraisage (9, 12).
